# EUROPÄISCHE PATENTSCHRIFT

(11) **EP 2 097 667 B1**
(45) Veröffentlichungstag und Bekanntmachung des Hinweises auf die Patenterteilung: **30.03.2011**
(21) Anmeldenummer: 07856020.8
(22) Anmeldetag: 26.11.2007
(51) Int. Cl.: F16N 7/32, F16N 7/30, F16N 19/00

(54) **EINWECHSELAGGREGAT MIT KLEINMENGENSCHMIERMITTELSPENDER**
EXCHANGE UNIT HAVING A SMALL VOLUME LUBRICANT DISPENSER
ORGANE INTERCHANGEABLE AVEC DISTRIBUTEUR DE PETITES QUANTITÉS DE LUBRIFIANT

(30) Priorität: 27.11.2006 DE 102006056257
(43) Veröffentlichungstag der Anmeldung: 09.09.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2007/002126
(87) Internationale Veröffentlichungsnummer: WO 2008/064651

(56) Entgegenhaltungen:
- US-A- 2 995 213
- US-A- 4 895 222
- US-A- 5 197 569

## Beschreibung

Die Erfindung betrifft ein Einwechselaggregat mit einem anoder eingebauten Kleinmengenschmiermittelspender, wobei das Einwechselaggregat einen Schmiermittelbedarf an mindestens einem Getriebe und/oder an mindestens einer Arbeitsfuge aufweist und wobei der Kleinmengenschmiermittelspender einen Schmiermittelbehälter mit mindestens einer Entlüftungsöffnung und mindestens einer Schmiermittelabgabeöffnung hat.

Aus der DE 29 28 077 C2 ist eine Nähmaschine mit Kleinmengenöler bekannt. Der Schmiermittelbehälter dieses Ölers hat allerdings eine unverschließbare Schmiermittelabgabeöffnung und eine immer offene Entlüftungsbohrung, so dass bei einer Lageveränderung der Nähmaschine das Öl auslaufen kann.

Der vorliegenden Erfindung liegt das Problem zugrunde, ein Einwechselaggregat mit einem an- oder eingebauten Kleinmengenschmiermittelspender zu entwickeln, der über Wochen oder Monate Teile des Einwechselaggregats - ohne Schmiermittelverlust im ausgewechselten Zustand - kontinuierlich oder diskontinuierlich zu schmieren vermag.

Das Problem wird mit den Merkmalen des Anspruchs 1 gelöst. Dazu sind am Kleinmengenschmiermittelspender zur Abgabe von Schmiermittel mindestens eine Schmiermittelabgabeöffnung und mindestens eine Entlüftungsöffnung gesteuert oder geregelt pneumatisch öffenbar.

Mit der Erfindung wird ein Einwechselaggregat mit einem anoder eingebauten Kleinmengenschmiermittelspender geschaffen, das eine Lebensdauer hat, die weit über der von einmalgeschmierten Einwechselaggregaten liegt. Das bedingt der adaptierte oder integrierte Kleinmengenschmiermittelspender. Über ihn wird z.B. pro Einwechselvorgang des Aggregats eine kleine Schmierstoffmenge in das Aggregatsinnere gefördert. Dort versorgt der Spender beispielsweise ein Getriebe oder eine Arbeitsfuge, z.B. eine Geradführung, ein Wälzlager oder ein Gleitlager, zumindest kurzfristig mit einer kleinen, dosierbaren Schmierstoffmenge. Der Schmierstoff kann hierbei ein flüssiger Schmierstoff, u.a. Öl, ein Schmierfett, oder ein Festschmierstoff, z.B. Graphitpulver sein.

Nach Abschluss des aggregateseitigen Bearbeitungsvorgangs wird das Einwechselaggregat wieder in einem Werkzeugmagazin abgelegt. Während des Ein- und Auswechselvorgangs, sowie während der Lagerung im Werkzeugmagazin, ist der Schmiermittelbehälter des Kleinmengenschmiermittelspenders - unabhängig von der Lage des Aggregats - dauerhaft schmiermitteldicht verschlossen.

Anstelle des Schmiervorganges pro Aggregatseinwechselung, kann das Aggregat auch während eines Bearbeitungsvorganges signalgesteuert in programmierbaren Zeitabständen geschmiert werden. Es ist auch denkbar, während des gesamten Bearbeitungszyklus das Schmiermittel kontinuierlich - wenn auch mit einem minimalen Volumenstrom - abzugeben.

Weitere Einzelheiten der Erfindung ergeben sich aus den Unteransprüchen und den nachfolgenden Beschreibungen schematisch dargestellter Ausführungsformen.
- Figur 1:: Seitenansicht eines vierspindeligen Einwechsel- aggregats mit Kleinmengenschmiermittelspender;
- Figur 2:: Dimetrische Ansicht eines teilgeschnittenen zweispindeligen Einwechselaggregats;
- Figur 3:: Vollschnittansicht zu Figur 2;
- Figur 4:: Frontlängsschnitt des Kleinmengenschmiermittel- spenders, die Schnittebene liegt in der Mitte des Ventilschiebers;
- Figur 5:: Querschnitt zu Figur 4;
- Figur 6:: Seitenlängsschnitt zu Figur 4;
- Figur 7:: wie Figur 4, jedoch mit betätigtem Öffnungsventil.

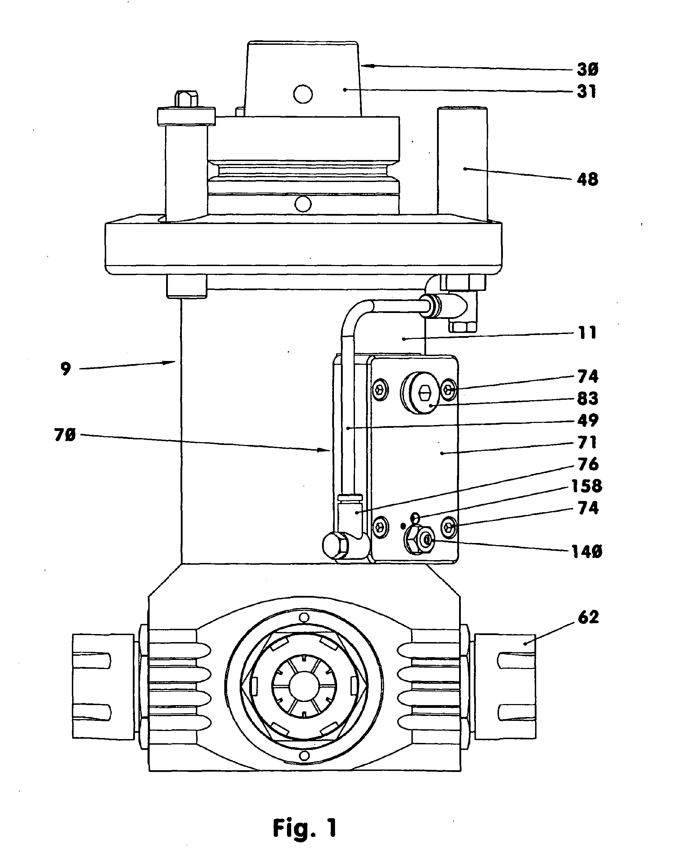

Die Figur 1 zeigt ein einwechselbares vierspindeliges Zerspanaggregat (9) mit einem Kleinmengenschmiermittelspender. Letzterer ist hier beispielsweise ein Kleinmengenöler (70).

Das Zerspanaggregat (9) nach Figur 1 ist ein einwechselbarer Werkzeugträger mit vier Spannzangen (61). Die Spannzangen (61) sitzen in Werkzeugspindeln, die über ein Getriebe und eine Antriebsspindel (30) von der das Zerspanaggregat (9) tragenden Werkzeugmaschine angetrieben werden. Das Zerspanaggregat (9) steht dazu mit der Werkzeugmaschine über einen Kegeladapter (31) und mindestens einen Druckluftadapter (48) in Verbindung. Der Druckluftadapter (48) ist mit dem Kleinmengenöler (70) mittels einer Pneumatikleitung (49) pneumatisch verbunden.

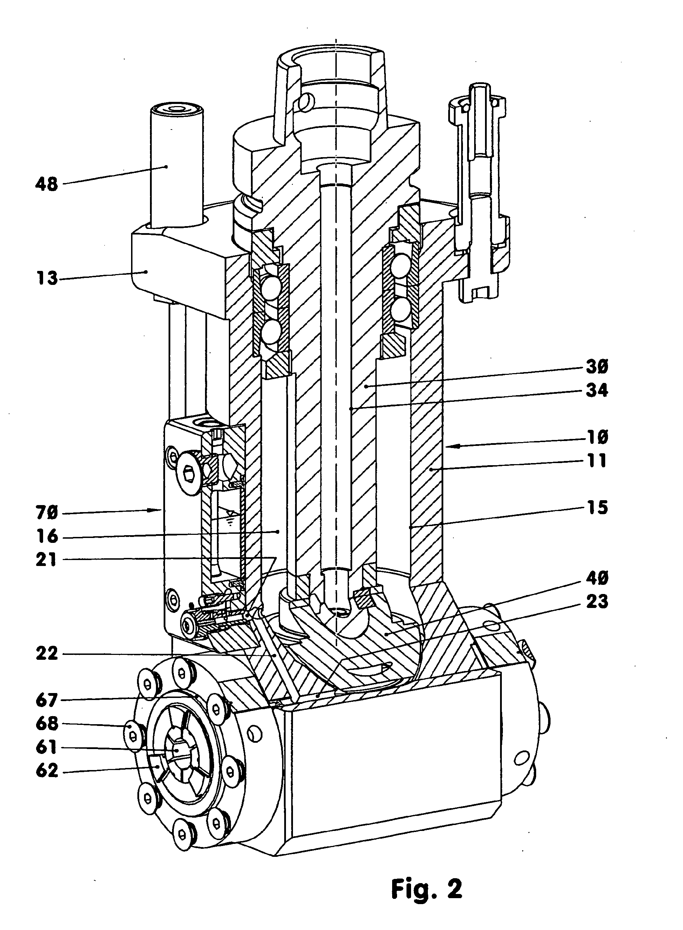

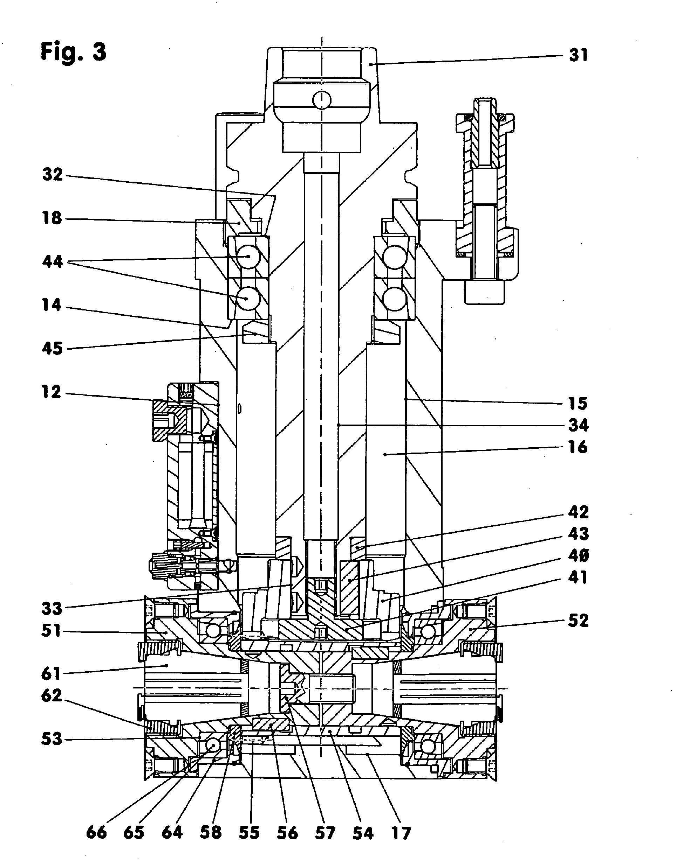

In Figur 2 ist ein zweispindeliges Zerspanaggregat (10) in einem Teilschnitt dargestellt. Der Teilschnitt lässt die Funktion des Ölens mittels eines Kleinmengenölers (70) erkennen, vgl. auch Figur 3.

Das Zerspanaggregat (10) hat z.B. ein rohrförmiges Aggregategehäuse (11), das zur Werkzeugmaschine hin in einem Adapterflansch (13) endet. Am Adapterflansch (13) ist mindestens ein Druckluftadapter (48) befestigt.

Im z.B. einteiligen Aggregategehäuse (11) befindet sich eine vertikale, mittige Stufenbohrung (15) zur Lagerung einer Antriebsspindel (30). Diese Stufenbohrung (15) wird im Bereich des unteren Gehäuseendes von einer gestuften Querbohrung (17) geschnitten oder gekreuzt. Diese Querbohrung (17) nimmt die Werkzeugspindeln (51, 52) auf.

Die zentral aufgebohrte Antriebsspindel (30) hat an ihrem werkzeugmaschinenseitigen Ende einen Kegelhohlschaft (31) oder eine vergleichbare Antriebsschnittstelle. Am anderen Ende befindet sich ein zylindrischer Sitz (33) zur Aufnahme eines Planrades (40). Als formschlüssige Wellen-Naben-Verbindung wird dort zwischen der Antriebsspindel (30) und dem Planrad (40) eine Passfeder (43) verwendet. Das Planrad (40) ist auf dem Sitz (33) mittels einer Sonderschraube (41) fixiert, die in das hintere Ende der Bohrung (34) eingeschraubt ist.

Zwischen dem Kegelhohlschaft (31) und dem zylindrischen Sitz (33) sind in O-Anordnung zwei Schrägkugellager (44) auf der Antriebsspindel (30) angeordnet. Sie sitzen axial fixiert zwischen einem Wellenbund (32) und einer Wellenmutter (45).

In der Stufenbohrung (15) sitzen die Schrägkugellager (44) vorgespannt zwischen einem Gehäusebund (14) und einer Gehäusemutter (18).

In der Querbohrung (17) sind zwei z.B. im Wesentlichen baugleiche Werkzeugspindeln (51, 52) koaxial nebeneinander gelagert. Jede Spindel (51, 52) sitzt über ein jeweils in einer Flanschhülse (64) angeordnetes Schrägkugellager (65) in der Querbohrung (17). Die Werkzeugspindeln (51, 52) sind zum einen über eine Hülse (54) und zum anderen über eine zentrale Schraube (57) miteinander starr verbunden. Jede Spindel (51, 52) sitzt über eine separate Passfeder (56) verdrehstarr in der Hülse (54).

Auf der einzelnen Werkzeugspindel (51, 52) ist das jeweilige Schrägkugellager (65) axial fixiert zwischen einem Wellenbund (53) und der Hülse (54) angeordnet. Zwischen dem einzelnen Schrägkugellager (65) und der Hülse (54) ist zusätzlich ein Schleuderring (58) platziert. Die Hülse (54) weist an ihrem linken Ende an der zylindrischen Außenkontur eine Stirnradverzahnung (55) auf. Hierbei bildet die Hülse (54) zusammen mit dem Planrad (40) ein Winkelgetriebe mit sich schneidenden Achsen. Das einen Schmiermittelbedarf aufweisende Getriebe hat eine Übersetzung von 1:1,2 ins Schnelle. Die maximale Abtriebsdrehzahl liegt beispielsweise bei 15000 Umdrehungen pro Minute.

Die u.a. außen am Aggregategehäuse (11) anliegenden Flanschhülsen (64) werden großteils vom freien äußeren Ende der Werkzeugspindeln (51, 52) umgriffen. Der Spaltraum (66) des Umgriff ist hierbei als Labyrinthdichtung gestaltet.

In der konischen Bohrung jeder Werkzeugspindel (51, 52) sitzt eine Spannzange (61). Letztere wird dort über eine - das einzusetzende Werkzeug spannende - Gewindespannmutter (62) gehalten. Um die Gewindespannmutter (62) herum befindet sich ein Spindelbund (67) und z.B. acht Senkschrauben (68). Dort kann z.B. eine Kreissägescheibe zentriert und befestigt werden.

Nach Figur 2 sitzt seitlich längsgeschnitten am Aggregategehäuse (11) der Kleinmengenöler (70). Er hat ein z.B. quaderförmiges, transparentes Gehäuse (71), das an einer beispielsweise ebenen Adapterfläche (12) des Aggregategehäuses (11) mit Hilfe der vier Schrauben (74) adaptiert ist. Das Gehäuse (71) ist mittels einer Pneumatikleitung (49) am Druckluftadapter (48) angeschlossen, vgl. auch Figur 1.

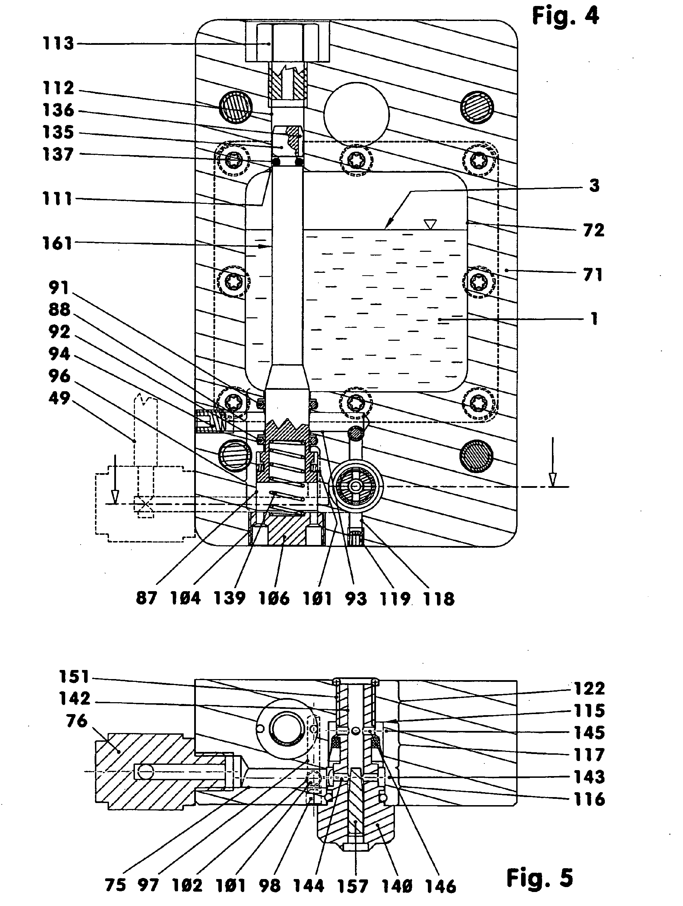

Der Kleinmengenöler (70) ist in den Figuren 4 bis 6 in anderen Schnitten dargestellt. Figur 4 zeigt einen vertikalen Längsschnitt durch das Gehäuse (71). Im Zentrum des Gehäuses (71) befindet sich ein z.B. quaderförmiger Hohlraum (72), der als Schmiermittelbehälter dient. Er ist mittels eines Deckels (73) mit Hilfe von acht Schrauben verschlossen. Der Deckel (73), z.B. ein planer Blechdeckel, sitzt auf der Rückseite des Gehäuses (71), also der Seite, mit der der Kleinmengenöler (70) an der Adapterfläche (12) des Aggregategehäuses (11) anliegt.

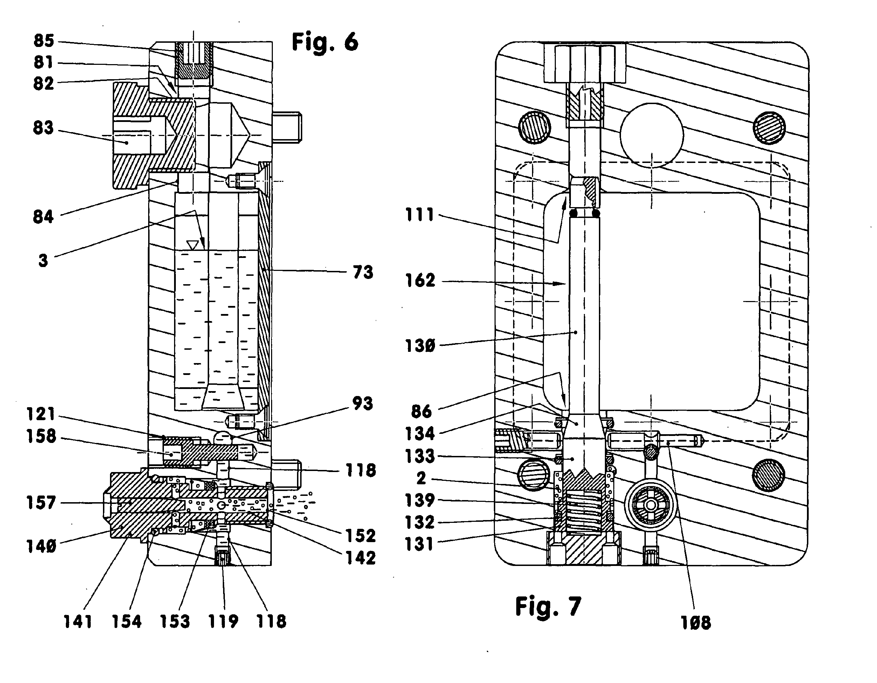

Der Schmiermittelbehälter hat drei Öffnungen. Die erste Öffnung ist eine oberhalb des Hohlraums (72) angeordnete Befüllöffnung (81), vgl. Figur 6. Sie ist hier durch einen Schraubstopfen (83) verschlossen. Der Schraubstopfen (83) sitzt in einer Gewindebohrung (82), die von oben her mit dem Hohlraum (72) über eine Bohrung (84) in Verbindung steht. Die Bohrung (84) ist durch einen Gewindestift (85) dicht verschlossen.

Die zweite Öffnung ist eine Schmiermittelabgabeöffnung (86). Letztere ist Teil einer vertikalen Stufenbohrung (87), in der ein Ventilschieber (130) gelagert ist. Die Stufenbohrung (87) hat dabei drei Abschnitte mit jeweils größer werdendem Durchmesser: einen Ablaufabschnitt (88), einen Zylinderabschnitt (96) und einen Verschlussabschnitt (104) mit Innengewinde.

Der Ablaufabschnitt (88) ist Teil eines Längsschieberventils (87, 130). Er trägt an seinen beiden Enden jeweils in einer Nut einen - nach Figur 4 - am zylindrischen Dichtabschnitt (132) des Ventilschiebers (130) anliegenden Dichtring (91, 92). Zwischen den Dichtringen (91, 92) wird der Ablaufabschnitt (88) von einer Zulaufquerbohrung (93) gekreuzt oder geschnitten, vgl. auch Figur 6. Die Zulaufquerbohrung (93) ist zur Gehäuseaußenkontur hin mittels eines Gewindestopfens (94) abgedichtet.

Im Zylinderabschnitt (96) ist der Kolben (131) des Ventilschiebers (130) positioniert. Der Kolben (131) trägt an seiner zylindrischen Außenkontur eine Kolbendichtung (132). Der Kolben (131). selbst ist zur Lagerung einer Rückholfeder (139) aufgebohrt. Unterhalb des Kolbens (131) sitzt im Verschlussabschnitt (104) ein belüfteter Schraubdeckel (106). Auf dem Schraubdeckel (106) stützt sich die Rückholfeder (139) ab.

Im Bereich des Übergangs vom Ablaufabschnitt (88) zum Zylinderabschnitt (96) wird die Stufenbohrung (87) von einer horizontalen Zuluftbohrung (97) gekreuzt. Letztere steht mit einer vertikalen Zuluftbohrung (101) in Verbindung, die wiederum an einer Hauptzuluftbohrung (75) angeschlossen ist. Die Hauptzuluftbohrung (75) steht in Wirkverbindung mit einem Anschlussstück (76), in das die externe Pneumatikleitung (49) einmündet. Die beiden Zuluftbohrungen (97, 101) sind mit Gewindestopfen (98, 102) verschlossen.

Die dritte Öffnung ist eine Entlüftungsöffnung (111). Sie ist im oberen Bereich des Gehäuses (71) neben der Befüllöffnung (81) angeordnet. Sie ist Teil einer Bohrung (112), deren Mittellinie mit der Mittellinie der Stufenbohrung (87) fluchtet. Die Bohrung (112) endet an der Oberseite des Gehäuses (71) in einem Gewinde. Sie ist dort mit einem Einschraubentlüfter (113) verschlossen. In die Bohrung (112) ragt das obere, im Wesentlichen zylindrische Ende (135) des Ventilschiebers (130) hinein. Das zylindrische Ende (135) hat einen kleineren Durchmesser als der zylindrische Dichtabschnitt (133). Zwischen beiden Bereichen liegt ein konischer Öffnungsabschnitt (134), dessen Kegelwinkel z.B. 30 Winkelgrade beträgt. Zwischen dem Dichtabschnitt (133) und dem zylindrischen Ende (135) kann der Ventilschieber (130) tailliert sein, um das Volumen des Schmiermitteltanks (72) zu vergrößern und die Ventilschiebermasse zu verringern.

Das Ventilschieberende (135) trägt einen O-Ring (137), der die Entlüftungsöffnung (111) nach Figur 4 dicht verschließt. Der Ventilschieber (130) hat oberhalb des O-Ringes (137) beispielsweise eine Entlüftungskerbe (136).

Im unteren Bereich des Gehäuses (71) sitzt mittig u.a. eine Förderdüse (140) mit einer Luftmengenregulierschraube (157). Die Förderdüse (140) sitzt in einer Stufenbohrung (115), die die Vorderseite des Gehäuses (71) mit der Gehäuserückseite verbindet, vgl. Figur 5. Sie hat drei Abschnitte.

Der erste Abschnitt, er hat den größten Durchmesser, ist der Zuluftabschnitt (116). In ihn mündet die Hauptzuluftbohrung (75). Der zweite Abschnitt ist der Schmiermittelzulaufabschnitt (117). Diesen Abschnitt (117) schneidet eine vertikale Bohrung (118), die an ihrem unteren Ende durch einen Gewindestopfen (119) verschlossen ist, während sie am anderen, oberen Ende auf die Zulaufquerbohrung (93) trifft. In die Schnittstelle beider Bohrungen (93, 118) ragt eine weitere Stufenbohrung (121) hinein, vgl. Figur 6. In ihr ist eine Schmiermittelregulierschraube (158) angeordnet. Die Stufenbohrungen (115, 121) sind parallel zueinander angeordnet.

Der dritte Abschnitt der Stufenbohrung (115) ist ein Gewindeabschnitt (122), über den die Förderdüse (140) im Gehäuse fixiert ist.

Die mit einem Sechskantkopf (141) ausgestattete Förderdüse (140) sitzt über einen O-Ring (154) abgedichtet in der Stufenbohrung (115). Die Förderdüse (140) hat an ihrem vorderen Ende ein Außengewinde (151). Sie hat ferner eine zentrale, durchgehende Förderbohrung (142), die im Bereich des Sechskantkopfes (141) ein Innengewinde aufweist, in dem die Luftmengenregulierschraube (157) verstellbar sitzt. Die Luftmengenregulierschraube (157) ist in ihrer vorderen Hälfte konisch ausgebildet. In diesem Bereich liegt normal zur Förderbohrung (142) eine erste Querbohrungsebene (143), in der zwei oder mehr Luftradialbohrungen (144) angeordnet sind. Diese Luftradialbohrungen (144) verbinden den Zuluftabschnitt (116) der Stufenbohrung (115) mit der Förderbohrung (142).

Zwischen dem Außengewinde (151) und der ersten Querbohrungsebene (143) liegt eine zweite Querbohrungsebene (145). In Letzterer sind zwei oder mehr Ölradialbohrungen (146) angeordnet, die den Schmiermittelzulaufabschnitt (117) mit der Förderbohrung (142) verbinden. Zwischen den beiden Querbohrungsebenen (143, 145) ist ein Lippendichtring (153) platziert, dessen Dichtlippe in Richtung der Luftradialbohrungen (144) orientiert ist.

Der Kleinmengenöler (70) sitzt in der Regel inaktiv am Einwechselaggregat (9, 10), das entweder im Einsatz ist oder im Magazin der Werkzeugmaschine geparkt ist. Sein Ventilschieber (130) steht in Schließstellung (161), vgl. Figuren 4 bis 6. Soll nun z.B. das Winkelgetriebe (40, 55) des Zerspanaggregats (10) - dargestellt in den Figuren 2 und 3 - geschmiert werden, so wird die Pneumatikleitung (49) über den Druckluftadapter (48) mit Druckluft beaufschlagt.. Die Druckluft (2) gelangt über das Anschlussstück (76) in die Hauptzuluftbohrung (75), vgl. Figur 5. Von dort aus strömt sie zum einen in den Zuluftabschnitt (116) der Stufenbohrung (115) und zum anderen über die Zuluftbohrungen (97, 101) in den Zylinderabschnitt (96) der Stufenbohrung (87), vgl. Figur 4.

Im Zuluftabschnitt (116) strömt die Luft über die Luftradialbohrungen (144) der Förderdüse (140) - an der Luftmengenregulierschraube (157) vorbei - in die zentrale Förderbohrung (142).

Im Zylinderabschnitt (96) strömt sie gegen die Kolbenringfläche des Kolbens (131), wodurch sich der Ventilschieber (130) nach unten bewegt. Unter einem Komprimieren der Rückholfeder (139) legt sich der Kolben (131) am Schraubdeckel (106) an. Der konische Öffnungsabschnitt (134) gelangt in den Bereich des Ablaufabschnitts (88) der Stufenbohrung (87), vgl. Figur 7. Die Schmiermittelabgabeöffnung (86) ist freigegeben. Gleichzeitig gelangt die Entlüftungskerbe (136) in den Bereich der Entlüftungsöffnung (111). Der Hohlraum (72) ist nun belüftet. Der Ventilschieber (130) steht in der Offenstellung (162).

Das Öl (1) des Schmiermittelbehälters (72) fließt entlang dem Konus (134) in die Zulaufquerbohrung (93) und von dort aus - an der Schmiermittelregulierschraube (158) vorbei - über die Bohrung (118) in den Schmiermittelzulaufabschnitt (117) der Stufenbohrung (115), vgl. Figur 5. Von dort aus wird das Öl (1) über die Ölradialbohrungen (146) in die druckluftdurchströmte Förderbohrung (142) gesogen. Im Bereich der zweiten Querbohrungsebene (145) bildet sich in der Förderbohrung ein Gas-Öl-Gemisch, vgl. Figur 6, das über die Abgabeöffnung (152) ausgeblasen wird.

Das Gas-Öl-Gemisch gelangt - nach Figur 2 - über eine z.B. radiale Gehäusebohrung (21) in den Innenraum (16) des Aggregategehäuses (11). Dort endet die Gehäusebohrung (21) nur mit einem Teil ihres Querschnitts. In die Gehäusebohrung (21) ragt eine schräg nach unten führende Bohrung (22), die in eine Horizontalbohrung (23) übergeht. Die Horizontalbohrung (23) endet im Bereich der Planradverzahnung. Der dort durch die Planradrotation herrschende Unterdruck erzeugt zusätzlich einen das Gas-Öl-Gemisch ansaugenden Sog. Somit wird die Verzahnung optimal benebelt. Um das Einblasen des Gas-Öl-Gemischs verlustarm zu ermöglichen, ist der Innenraum (16) gegenüber der Umgebung z.B. durch mindestens eine spezielle Bohrung oder durch Labyrinthdichtungen entlüftbar.

Das über die Gehäusebohrung (21) direkt in den Innenraum (16) zerstäubte Öl (1) gelangt zudem in den Schleuderbereich der darunter liegenden Schleuderscheibe (58), vgl. Figur 3. Letztere fördert durch ihre Rotation zusätzlich die Ölvernebelung.

In der Regel wird das Längsschieberventil (87, 112, 130) nur kurzzeitig geöffnet, um beispielsweise 4 ... 8 mm³ Hydrauliköl der Viskosität 10...40 mm²/s abzugeben. Das Öffnen erfolgt z.B. beim Einwechseln des Zerspanaggregats (10). Bei einem 100-maligen Einwechseln pro Tag reicht der Ölvorrat des Kleinmengenölers (70) 90 bis 180 Tage, ohne nachzufüllen.

Um die Fördermengen pro Ölausstoß möglichst klein zu halten, kann zumindest bei einem Teil der ölführenden Bohrungen der Querschnitt z.B. durch Füllbolzen (108), vgl. Figur 7, reduziert werden.

Nach einem Unterbrechen der Druckluftzufuhr schiebt die Rückholfeder (139) den Längsschieber (130) wieder nach oben. Hierbei werden die Öffnungen (86) und (111) öldicht, also auslaufsicher, verschlossen. Der Längsschieber (130) befindet sich wieder in der Schließstellung (161), vgl. Figur 4.

Die gezeigte Kombination aus Einwechselaggregat (9, 10) und Kleinmengenschmiermittelspender (70) wird in der Werkzeugmaschine nur hängend eingesetzt, d.h. der Adapterflansch (13) befindet sich oben und die Mittellinien der Werkzeugspindeln (51, 52) liegen zumindest annähernd in einer Horizontalebene, die unterhalb des Adapterflansches (13) liegt. Um nun das Einwechselaggregat in anderen Lagen mit dem Kleinmengenöler (70) verwenden zu können, kann letzterer auch schwenkbar am Aggregategehäuse (11) befestigt werden. Dazu benötigt man u.a. einen längeren Pneumatikschlauch (49) und weitere Gehäusebohrungen (21). Die nicht benötigten Gehäusebohrungen werden beim z.B. rastenden Schwenken des Ölers (70) verschlossen.

Nach den Figuren 4, 6 und 7 wird die Entlüftungsöffnung (111) direkt durch den Längsschieber (130) verschlossen. Selbstverständlich kann zur Entlüftung auch ein mittels des Längsschiebers (130) mechanisch entsperrbares Rückschlagventil verwendet werden, dessen Schließglied z.B. durch eine Schraubendruckfeder in Schließstellung gehalten wird.

Die gezeigten Aggregate (9, 10) werden über die Werkzeugmaschine mit Druckluft versorgt. Wird z.B. im Aggregategehäuse (11) auf der schnell rotierenden Antriebsspindel (30) eine kleine Turbine angeordnet, die von einem entsprechenden Verdichtergehäuse umgeben ist, kann die Antriebsspindelrotation zur Drucklufterzeugung genutzt werden. Die sich beim Starten der Antriebsspindel (30) aufbauende Druckluft kann z.B. zu einem kurzzeitigen Betätigen des Ölers (70) benutzt werden.

Ggf. kann das Flüssigkeitsniveau (3) bzw. der Füllstand des Schmiermittelbehälters (72) mittels eines geeigneten Sensors oder Sensorsystems überwacht werden. Bei einer entsprechenden Schwellwertüberschreitung kann ein Alarmsignal ausgelöst werden. Auch ist es möglich, den Schmierstoffbehälter im Werkzeugmagazin automatisch zu befüllen.

### Bezugszeichenliste:

- 1: Schmiermittel, Öl
- 2: Druckluft
- 3: Flüssigkeitsniveau
- 9: Einwechselaggregat, Zerspanaggregat, Vierspindler

- 10: Einwechselaggregat, Zerspanaggregat, Zweispindler
- 11: Aggregategehäuse
- 12: Adapterfläche
- 13: Adapterflansch
- 14: Gehäusebund
- 15: Stufenbohrung, vertikal, für (30)
- 16: Innenraum
- 17: Querbohrung, gestuft, für (51, 52)
- 18: Gehäusemutter

- 21: Gehäusebohrung
- 22: Bohrung, schräg
- 23: Horizontalbohrung

- 30: Antriebsspindel
- 31: Kegeladapter, Kegelhohlschaft
- 32: Wellenbund
- 33: Zylindersitz
- 34: Bohrung, zentral

- 40: Planrad, Getriebe
- 41: Planradschraube, Sonderschraube
- 42: Distanzring
- 43: Passfeder
- 44: Schrägkugellager
- 45: Wellenmutter
- 48: Druckluftadapter
- 49: Druckluftleitung

- 51, 52: Werkzeugspindeln, Spindeln
- 53: Wellenbund
- 54: Hülse
- 55: Stirnradverzahnung, Getriebe
- 56: Passfeder
- 57: Schraube, zentral
- 58: Schleuderscheibe

- 61: Spannzangen, Werkzeugaufnahmen
- 62: Gewindespannmutter
- 64: Flanschhülse
- 65: Schrägkugellager
- 66: Spaltraum, Labyrinthdichtung
- 67: Spindelbund
- 68: Senkschrauben

- 70: Kleinmengenschmiermittelspender, Kleinmengenöler
- 71: Gehäuse
- 72: Hohlraum, Schmiermittelbehälter, Tank
- 73: Deckel
- 74: Schrauben zum Befestigen
- 75: Hauptzuluftbohrung
- 76: Anschlussstück

- 81: Befüllöffnung
- 82: Gewindebohrung
- 83: Schraubstopfen
- 84: Bohrung, vertikal
- 85: Gewindestift

- 86: Schmiermittelabgabeöffnung

- 87: Stufenbohrung für Ventilschieber (130)
- 88: Ablaufabschnitt
- 91, 92: Dichtringe, oben, unten
- 93: Zulaufquerbohrung
- 94: Gewindestopfen

- 96: Zylinderabschnitt
- 97: Zuluftbohrung, horizontal
- 98: Gewindestopfen
- 101: Zuluftbohrung, vertikal
- 102: Gewindestopfen
- 104: Verschlussabschnitt
- 106: Schraubdeckel
- 108: Füllbolzen

- 111: Entlüftungsöffnung
- 112: Bohrung, vertikal
- 113: Einschraubentlüfter

- 115: Stufenbohrung für Förderdüse (140)
- 116: Zuluftabschnitt
- 117: Schmiermittelzulaufabschnitt
- 118: Bohrung, vertikal
- 119: Gewindestopfen
- 121: Stufenbohrung für (158)
- 122: Gewindeabschnitt

- 130: Ventilschieber
- 131: Kolben
- 132: Kolbendichtung
- 133: Dichtabschnitt, zylindrisch
- 134: Öffnungsabschnitt, konisch
- 135: Ventilschieberende

- 136: Entlüftungskerbe
- 137: O-Ring
- 139: Rückholfeder

- 140: Förderdüse
- 141: Sechskantkopf
- 142: Förderbohrung, zentral
- 143: erste Querbohrungsebene
- 144: Luftradialbohrungen
- 145: zweite Querbohrungsebene
- 146: Ölradialbohrungen

- 151: Außengewinde
- 152: Abgabeöffnung
- 153: Lippendichtring
- 154: O-Ring

- 157: Luftmengenregulierschraube
- 158: Schmiermittelregulierschraube

- 161: Schließstellung von (130)
- 162: Offenstellung von (130)

## Patentansprüche

1. Einwechselaggregat mit einem an- oder eingebauten Kleinmengenschmiermittelspender,
- wobei das Einwechselaggregat (9, 10) einen Schmiermittelbedarf an mindestens einem Getriebe (40, 55) und/oder an mindestens einer Arbeitsfuge aufweist,
- wobei der Kleinmengenschmiermittelspender (70) einen Schmiermittelbehälter (72) mit mindestens einer Entlüftungsöffnung (111) und mindestens einer Schmiermittelabgabeöffnung (86) hat,
**dadurch gekennzeichnet,**
- **dass** zur Abgabe von Schmiermittel (1) die mindestens eine Schmiermittelabgabeöffnung (86) und die mindestens eine Entlüftungsöffnung (111) gesteuert oder geregelt pneumatisch öffenbar sind.

2. Einwechselaggregat mit einem Kleinmengenschmiermittelspender gemäß Anspruch 1, **dadurch gekennzeichnet, dass** die Entlüftungsöffnung (111) und die Schmiermittelabgabeöffnung (86) des Kleinmengenschmiermittelspenders (70) zumindest annähernd gleichzeitig öffenbar sind.

3. Einwechselaggregat mit einem Kleinmengenschmiermittelspender gemäß Anspruch 2, **dadurch gekennzeichnet, dass** die Entlüftungsöffnung (111) und die Schmiermittelabgabeöffnung (86) über ein pneumatisch öffenbares Längsschieberventil (86, 111, 130) öffenbar sind, wobei beide Öffnungen (86, 111) über denselben Ventilkolben (130) in Offenstellung (162) bringbar sind.

4. Einwechselaggregat mit einem Kleinmengenschmiermittelspender gemäß Anspruch 1, **dadurch gekennzeichnet, dass** das Gehäuse (71) des Kleinmengenschmiermittelspenders (70) eine Abgabeöffnung (152) hat, die unterhalb dem Flüssigkeitsniveaus (3) des Schmiermittelbehälters (72) angeordnet ist.

5. Einwechselaggregat mit einem Kleinmengenschmiermittelspender gemäß Anspruch 1, **dadurch gekennzeichnet, dass** der Kleinmengenschmiermittelspender (70) eine Förderdüse (140) aufweist, in der sich Druckluft (2) und Öl (1) mischen.

6. Einwechselaggregat mit einem Kleinmengenschmiermittelspender gemäß Anspruch 4, **dadurch gekennzeichnet, dass** das Gehäuse (71) aus einem transparenten Kunststoff besteht.

7. Einwechselaggregat mit einem Kleinmengenschmiermittelspender gemäß Anspruch 1, **dadurch gekennzeichnet, dass** die Einwechseleinheit (9, 10) rotierende Werkzeugspindeln (51, 52) und/oder Werkzeugaufnahmen (61) hat, die gegenüber dem Gehäuse (11) des Aggregats (9, 10) mittels reibungsfreier Labyrinthdichtungen (66) abgedichtet sind.

## Claims

1. Exchange unit comprising a small-quantity lubricant dispenser attached thereto or incorporated therein,
- said exchange unit (9, 10) holding an amount of lubricant required by at least one transmission (40, 55) and/or at least one working joint; and
- small-amount lubricant dispenser (70) including a lubricant reservoir (72) having at least one vent opening (111) and at least one lubricant discharge opening (86) therethrough;
**characterized in that**
- said at least one lubricant discharge opening (86) and said at least one vent opening (111) are adapted to be opened pneumatically under open-loop or closed-loop control.

2. Exchange unit comprising a small-quantity lubricant dispenser as defined in claim 1, **characterized in that** vent opening (111) and lubricant discharge opening (86) of small-quantity lubricant dispenser (70) are adapted to be opened at least approximately at the same time.

3. Exchange unit comprising a small-quantity lubricant dispenser as defined in claim 2, **characterized in that** vent opening (111) and lubricant discharge opening (86) are adapted to be opened by a pneumatically actuated linear spool valve (86, 111, 130), with both openings (86, 111) adapted to be placed in their open positions (162) by the same valve piston (130).

4. Exchange unit comprising a small-quantity lubricant dispenser as defined in claim 1, **characterized in that** housing (71) of small-quantity lubricant dispenser (70) has therethrough a discharge opening (152) located below the fluid level (3) in lubricant reservoir (72).

5. Exchange unit comprising a small-quantity lubricant dispenser as defined in claim 1, **characterized in that** small-quantity lubricant dispenser (70) comprises a lubricant ejector nozzle (140) in which pressurized air (2) and oil (1) are mixed.

6. Exchange unit comprising a small-quantity lubricant dispenser as defined in claim 4, **characterized in that** housing (71) consists of a transparent plastics material.

7. Exchange unit comprising a small-quantity lubricant dispenser as defined in claim 1, **characterized in that** exchange unit (9, 10) comprises rotating tool spindles (51, 52) and/or tool holders (61) sealed against housing (11) of unit (9, 10) by means of frictionless labyrinth seals (66).

## Revendications

1. Agrégat interchangeable avec un dispensateur de petites quantités de lubrifiant qui est monté sur cet agrégat ou intégré dans celui-ci,
- l'agrégat interchangeable (9, 10) comportant du lubrifiant pour au moins un mécanisme de transmission (40, 55) et/ou pour au moins une jointure,
- le dispensateur de lubrifiant (70) étant muni d'un récipient de lubrifiant (72) avec au moins un orifice de ventilation (111) et au moins une ouverture de distribution de lubrifiant (86),
**caractérisé en ce**
- **qu'**au moins une ouverture de distribution de lubrifiant (86) et au moins un orifice de ventilation (111) sont commandés ou réglés et peuvent être ouverts pneumatiquement pour la distribution de lubrifiant (1).

2. Agrégat interchangeable avec un dispensateur de petites quantités de lubrifiant selon la revendication 1, **caractérisé en ce que** l'orifice de ventilation (111) et l'ouverture de distribution de lubrifiant (86) du dispensateur de lubrifiant (70) peuvent être ouverts presque en même temps.

3. Agrégat interchangeable avec un dispensateur de petites quantités de lubrifiant selon la revendication 2, **caractérisé en ce que** l'orifice de ventilation (111) et l'ouverture de distribution de lubrifiant (86) peuvent être ouverts à l'aide d'une soupape à coulisse longitudinale (86, 111,130) qui peut être ouverte pneumatiquement, les deux ouvertures (86, 111) pouvant d'être
mises dans la position ouverte (162) par le même piston à soupape.

4. Agrégat interchangeable avec un dispensateur de petites quantités de lubrifiant selon la revendication 1, **caractérisé en ce que** le boîtier (71) du dispensateur de lubrifiant (70) dispose d'une ouverture de distribution de lubrifiant (152) placée au-dessous du niveau de liquide (3) du réservoir de lubrifiant (72).

5. Agrégat interchangeable avec un dispensateur de petites quantités de lubrifiant selon la revendication 1, **caractérisé en ce que** le dispensateur de lubrifiant (70) est équipé d'une buse (140) qui assure le mélange d'air comprimé (2) et d'huile (1).

6. Agrégat interchangeable avec un dispensateur de petites quantités de lubrifiant selon la revendication 4, **caractérisé en ce que** le boîtier (71) est réalisé dans une matière plastique transparente.

7. Agrégat interchangeable avec un dispensateur de petites quantités de lubrifiant selon la revendication 1, **caractérisé en ce que** l'agrégat interchangeable (9, 10) est équipé de broches porte-outil rotatives (51,52) et/ou d'éléments de serrage (61) dont l'étanchéité face au boîtier (11) de l'agrégat est assurée par des joints labyrinthe (66) exempts de friction.
